# EUROPEAN PATENT SPECIFICATION

(11) **EP 3 280 165 B1**
(45) Date of publication and mention of the grant of the patent: **25.12.2019**
(21) Application number: 17184879.9
(22) Date of filing: 04.08.2017
(51) Int. Cl.: H04W 16/28

(54) **AUTOMATED BEAM STEERING**
AUTOMATISIERTE STRAHLLENKUNG
ORIENTATION DE FAISCEAU AUTOMATISÉ

(30) Priority: 05.08.2016 EP 16183027
(43) Date of publication of application: 07.02.2018
(73) Proprietor: IPCom GmbH & Co. KG, 82049 Pullach (DE)
(72) Inventor: SCHMIDT, Andreas, 38124 Braunschweig (DE); BIENAS, Maik, 38170 Schöppenstedt (DE); LUFT, Achim, 38118 Braunschweig (DE); HANS, Martin, 31162 Bad Salzdetfurth (DE)
(74) Representative: Tomlinson, Edward James

(56) References cited:
- US-A1- 2006 072 501
- US-B1- 6 701 164
- US-B1- 6 701 164
- GODARA L C: "APPLICATIONS OF ANTENNA ARRAYS TO MOBILE COMMUNICATIONS, PART I: PERFORMANCE IMPROVEMENT, FEASIBILITY, AND SYSTEM CONSIDERATIONS", PROCEEDINGS OF THE IEEE, IEEE. NEW YORK, US, vol. 85, no. 7, 1 July 1997 (1997-07-01), pages 1031-1060, XP000735330, ISSN: 0018-9219, DOI: 10.1109/5.611108

## Description

The present invention relates to beam steering in a mobile communications system.

With the evolution of cellular technology from existing 3.9G and 4G systems (such as 3GPP's LTE and LTE-Advanced radio access technologies) to 5G, higher frequencies come into play. For example, the next generation radio access technology to be specified by 3GPP as a submission into the IMT 2020 process triggered by ITU-R is expected to operate in "legacy" frequency bands of up to 6 GHz and in some new frequency bands well beyond this point (for example, mm wave radio technology operating in the 60 GHz frequency range) that will be made available for cellular radio communication in future.

The mm wave frequency band ranges from 20 to 300 GHz and signals transmitted therein often experience a relatively high path loss. As a result, directional beam forming techniques may be used for UL and/or DL transmissions between a base station and a UE.

Directional antennas and beam steering techniques are particularly useful for deployment in future communication systems operating in higher frequency bands. However, beam forming techniques can also be utilized in current cellular communication systems operating in "legacy" frequency bands below 6GHz, such as LTE (3.9G) and LTE-Advanced (4G) according to 3GPP's suite of specifications. Existing 3.9G and 4G communication systems were not designed to support beam forming. Instead, these were designed to provide seamless coverage. Nevertheless, beam forming is possible also in the lower frequency range.

As opposed to omnidirectional antennas, directional antennas allow concentration of radio signals towards a certain spot or area. Concentration of radio waves into a certain direction can be achieved for instance with antenna arrays (as known as "phased arrays"). An antenna array is an antenna system that encompasses a certain number of distinct antenna elements. The geometrical arrangement of these single antenna elements may vary significantly and determines the beam forming characteristics as follows: arranging multiple antenna elements in a row (e.g., in a 1x8 formation) would allow for two-dimensional beam forming within a (pre-defined) dissemination plane. An arrangement in matrix format (e.g., in an 8x8 formation) would allow for three-dimensional beam forming in a (pre-defined) dissemination space.

The relative phases of the respective signals feeding the distinct antenna elements forming an antenna array are set in such a way that the effective radiation pattern of the entire array is reinforced in a desired direction and - at the same time - suppressed in undesired directions. The phase relationship among the single antenna elements may be fixed or it may be adjustable (as for beam steering). Our invention is related to the latter.

A directed antenna beam (e.g., generated by means of a one dimensional antenna array, such as the 1x8 phased array mentioned above) usually consists of a strong main lobe pointing in the desired direction of signal reinforcement and at least one side lobe with much less intensity.

Beams are a good means to prolong the extension of a cell. However, beams are also (more or less) narrow by definition (in comparison to the signals disseminated by legacy omni-directional antennas). In case of fixed beams, the coverage area is severely restricted as these beams cannot be moved. In case of flexible beam steering, the coverage area is still quite restricted, even if those beams can be directed by concentrating the radio signal transmission to different areas or spots over time.

In both cases, narrow cells always bear the drawback that moving UEs have to undergo cell reselection procedure (when residing in IDLE mode of operation) and handover procedure (when residing in CONNECTED mode of operation) quite frequently. Accordingly, known beam steering techniques are generally only applicable in situations where a user equipment, UE, is stationary, allowing the beam to be directed to the position of that UE or are used to scan an area to locate a UE, such as described in US 2003/0195017 A1.

US 9,306,657 describes a method of providing a communication link for a mobile platform. The method may involve generating a single beam and controlling the single beam to simultaneously generate first and second communication lobes from the single beam, with the first communication lobe being steered to communicate with a first base transceiver station (BTS). The method may further involve simultaneously using the second communication lobe to communicate with the second BTS and fading out the first lobe so that communication with the mobile platform is transferred to the second BTS.

US 2016/0029370 A1 describes a network controller including processing circuitry configured to receive dynamic position information indicative of a three dimensional position of at least one mobile communication node, compare fixed position information indicative of fixed geographic locations of respective access points of a network to the dynamic position information to determine a relative position of the at least one mobile communication node relative to at least one of the access points based on the fixed position information and the dynamic position information, and provide network control instructions to at least one network asset based on the relative position. The position information may then be used for beam steering.

WO 2016/005003 A1 describes a BTS and a method for wireless communication with a UE in a wireless communication system. The BTS comprises a Multiple Input Multiple Output, MIMO, antenna array configured for beamforming and MIMO transmission. The BTS further comprises a processing circuit, configured for supporting same or separate downlink precoding for control plane and user plane by modifying phase excitation of the MIMO antenna array and causing a transceiver to create an antenna beam by providing different phase for each antenna element of the MIMO antenna array; and a transceiver, configured for transmitting a signal in the antenna beam via the MIMO antenna array, to be received by the UE.

WO 2016/028426 A1 describes methods, systems, and apparatuses for using known geographical information in directional wireless communication systems. In some aspects, an estimated position of a receiver relative to a transmitter may be determined based at least in part on known geographical information, and a desired beam direction for wireless communication from the transmitter to the receiver may be searched for based at least in part on the estimated position of the receiver.

US 6,701,164 describes an arrangement in which multiple directional transmission beams may be scanned along a road with information as to the movement of a vehicle on the road being generated for example by the use of tollgates.

The present invention provides a method of operating a mobile communication transmission and reception point, the method comprising generating at least one directional transmission beam for transmitting signals to at least one user equipment device within a beam coverage, and changing a transmission direction of the at least one directional transmission beam in accordance with an expected motion of the at least one user equipment device, wherein the transmission direction of the at least one directional transmission beam is changed dependent on a measure of a handover rate between a first directional transmission beam and a second directional transmission beam, wherein the at least one directional transmission beam may be one of the first directional transmission beam and the second directional transmission beam.

The invention therefore provides a method of operating a mobile communication transmission and reception point, the method comprising generating at least one directional transmission beam for transmitting signals to at least one user equipment device within a beam coverage, and changing a transmission direction of the at least one directional transmission beam in accordance with an expected motion of the at least one user equipment device, wherein the transmission direction of the at least one directional transmission beam is dependent on a measure of an inter-directional beam handover rate.

In one aspect, the present invention provides directed antenna beams of a mobile communication system which perform steady movements within a pre-determined area or along a (potentially curved) line (e.g., a road, a highway or railroad tracks) in such a way that (the end points of) the beams sweep along the line at approximately the same speed as the vehicles or trains to be served, thereby extending the coverage of a cell and prolonging the dwell time in coverage and mitigating the need for cellular devices located/deployed in (or carried aboard) the vehicles or trains to perform operations related to cell re-selection or handover. All these benefits are achieved without the need to continuously adjust beams to each individual device and thus without constant signalling between the base station and mobile devices for beam steering.

Two or more beams may be generated by the same base station and/or disseminated from the same transmission and reception point (TRP) in such a way that neighbouring beams (with overlapping coverage areas) use different sets of resources, and spatially separated beams may use the same set of resources thereby re-using the resources without any interference. In one embodiment these beams can represent the same cell; in another embodiment these beams can represent different cells (e.g., indicated by different Physical Cell IDs).

In case of LTE, a "set of resources" may be represented by a resource block made up of 12 sub carriers and 7 OFDM symbols (or multiples/fractions thereof).

The steady beam movement may depend on the time of day (day time / night time / rush hour etc.). The steady beam movement may also be adjusted based on the vehicles' or carriages' current (average) speed or actual position along their known or projected route. This type of information can for instance be collected by various sensors deployed in/above/near the road or railroad tracks, or can be reported by the vehicles and trains themselves. It is sufficient to let only one or a few of the vehicles do such reporting. In one embodiment (as a refinement of the procedure), the base station may temporarily request such a reporting from selected vehicles/devices (e.g., with a configurable periodicity and granularity). Note: Proper operation of the inventive steady beam movement is still possible without any reporting for beam tracking.

Feedback collected about the vehicles' or trains' momentary positions and/or velocities may need to be processed on the infrastructure side for sensible beam forming and tracking, as the beam's angular/radial adjustment speeds and the mobile devices' velocities are usually not the same. For sensible beam forming and tracking a Beam Forming Control Entity (BFCE) may be used. One task of the BFCE to perform may be the adjustment of the sweep speed of (the end points of) the beams along the line/trajectory based on the amount and/or type of mobile devices that hurry ahead and/or lag behind. The present invention may lead to significant benefits including reducing cell re-selection events and handover events. The reduced number of these events goes along with less signalling over the precious air interface as well as less energy consumption.

Spatial separation is improved allowing a more efficient resource utilization (e.g., by re-using the same set of resources for non-adjacent beams) resulting in an increased system throughput.

User experience is improved significantly, as the risk of handover failure is reduced. The coverage of a cell is extended and the dwell time in coverage is prolonged by beam forming means without the need to collect feedback for beam steering.

The invention is defined by the independent claims 1, 8, 9, and 10. Preferred embodiments of the invention are stipulated in the dependent claims. While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention. Embodiments of the invention will now be described, by way of example only, with reference to the accompanying drawings in which:
Fig. 1 is a schematic diagram of a beam forming control entity connected to a transmission and reception point;
Fig. 2 shows a schematic arrangement of a transmission beam sweeping between three positions; and
Fig. 3 shows three transmission beams at a particular point in time providing coverage for UEs moving along a road.

In the context of this invention, a transmission and reception point (TRP) is an antenna (or antenna array) deployed at a base station, remote radio head, access point, or relay node that is capable of beam forming. Beam forming is for example achieved by means of adaptive antenna arrays (or "phased antenna arrays") or alternatively a physical device such as a dish aerial which may be combined with a mechanical steering mechanism.

In general, directional beam forming techniques may be used for UL and/or DL transmissions between a base station and a UE. Thus, a directed orientation for radio communication may include a transmission orientation (in downlink direction, i.e. from the tower to the mobile device) and/or a reception orientation (in uplink direction, i.e. from the mobile device to the tower). Consequently, the term transmission and reception point (TRP) used throughout the text shall explicitly include transmission and reception capabilities, even if the following examples focus on downlink transmissions.

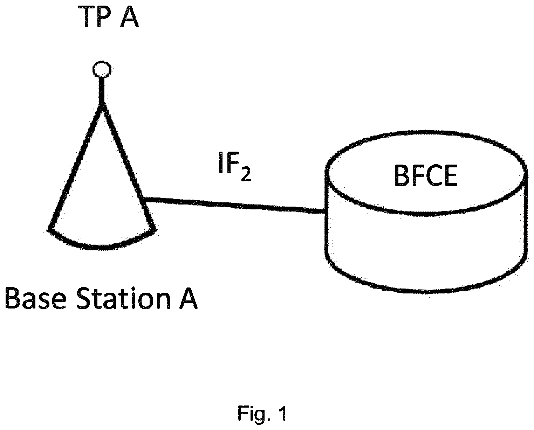

In the invention, the concept of a beam forming control entity (BFCE) to adjust a sweep speed of (end points of) beams along a line/trajectory is introduced. This sweep speed control may be applied to the whole system of rotating beams or a sub set thereof and it may be based on the amount and/or type of mobile devices that hurry ahead and/or lag behind. Fig. 1 shows an example architecture in which a base station is connected to a BFCE via a reference point IF₂. Alternatively, the BFCE can reside as a functional entity inside a base station or a transmission and reception point (TRP).

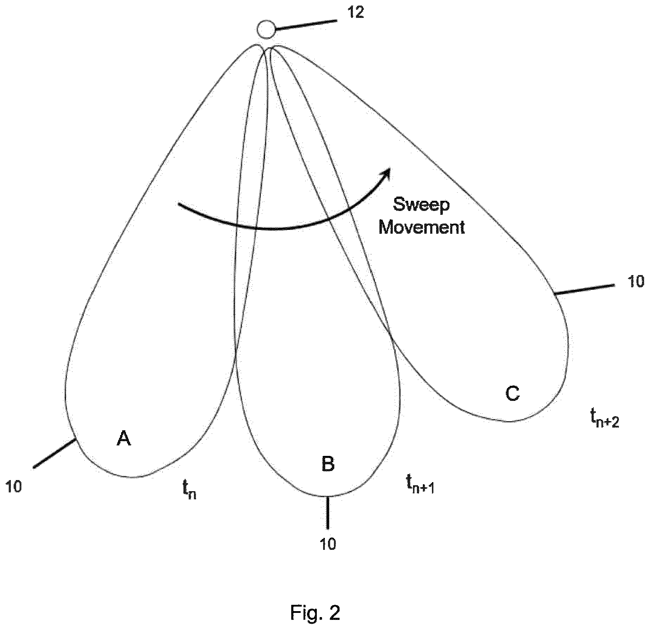

Referring to Fig. 2, there is shown a beam 10 disseminating from a transmission and reception point 12 at three different time instances tₓ. At time tₙ the beam is directed towards area A, at time tₙ₊₁ the beam is directed towards area B, and at time tₙ₊₂ the beam is directed towards area C.

The beam may be configured to jump from on area to another (step-wise movement, with coarse granularity) or to sweep through the coverage area (continuous movement, with fine granularity). Transition between these two modes of operation solely depends on the step size (granularity) chosen and is as such fluent. Two adjacent beam positions may also overlap in part.

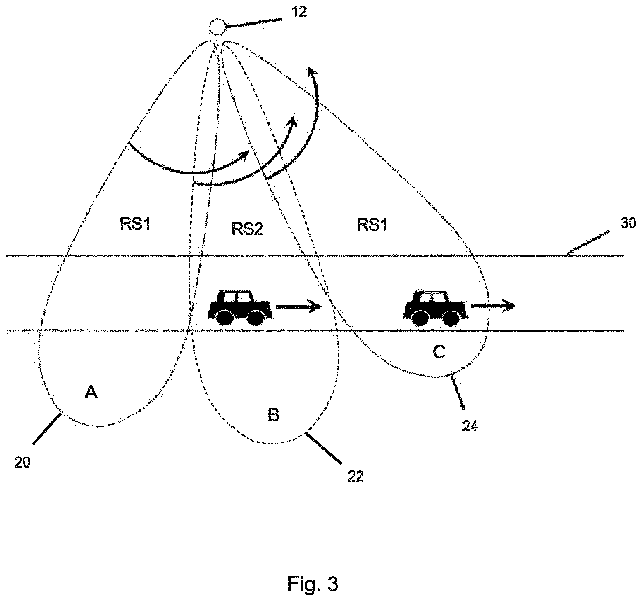

Fig. 3 depicts in more detailed form a snapshot in time of the operation of the TRP 12 of Fig. 2, configured to transmit multiple radio beams 20, 22 and 24 concurrently; each radio beam is directed to a different coverage area.

All three radio beams are configured to sweep across a coverage area, thereby tracking traffic moving along a road 30. While a road is depicted in Fig. 3, traffic could also, for example, be on a railroad track or a river. The end points of the various beams sweep along a known or projected trajectory corresponding to a trajectory of the vehicles, trains or boats and at approximately the same speed as the vehicles, trains or boats to be served. Such a continuous radio beam movement is able to prolong the dwell time in coverage and to mitigate the need for cell re-selection operations (for mobile devices residing in IDLE mode of operation) or handover operations (for mobile devices residing in CONNECTED mode of operation).

The three beams 20, 22 and 24 are each assigned a respective resource set (RS) in such a way that neighbouring beams with overlapping coverage areas use different (i.e. orthogonal) sets of resources, thus neighbouring beams appear to mobile devices as different cells, and spatially separated beams may use the same set of resources thereby enabling re-use of resource sets without any interference. For instance, according to the snapshot shown in Fig. 3, beam 20 and beam 24 can utilise the same RS, here indicated as RS1, while beam 22 has a different RS, RS2.

According to one aspect of the present invention, the steady beam movement may depend on the time of day (day time / night time / rush hour / etc.). For instance, during rush hour (when traffic on the highway usually moves more slowly) the base station may choose to reduce the speed of the sweep movement along the respective highway. Alternatively, a measurement procedure may be performed to obtain a measurement of the current average speed of traffic, with this measurement being used to control the sweep speed. This measurement may either be performed by the mobile communications system directly or data could be obtained from another source, such as a provider of traffic information.

According to a still further aspect of the present invention, a base station may provide moving beams rotating in a first direction using a first and a second set of resources and additionally beams rotating in a second direction (e.g. rotating in the opposite direction of the first direction) using a third and a fourth set of resources. This will enable to provide optimised coverage for traffic in both directions of a street or railway.

Since it cannot be guaranteed without monitoring of individual UEs that the beam sweeps at the same speed as the movement of the UE, a handover from one beam to another might be required. A BFCE is deployed on the infrastructure side (e.g., as part of a base station, a transmission and reception point, or as a separate entity) in order to detect a need for a handover of vehicles/trains from their current beam or cell to the preceding or lagging one inside a (sub) system of rotating beams. In the example scenario of Fig. 3, if a significant amount of vehicles indicates a need to change from beam 22 to beam 24, i.e. they provide measurements to the network that indicate neighbour cells to offer better service, then the sweep speed of the rotating (sub) system may be too low. A too low sweep speed may also be derived from too many UEs indicating a need to be handed over from beam 20 entering beam 22. Likewise, if a significant amount of vehicles indicates a need to change from beam 22 to beam 20 or from beam 24 to beam 22 then the sweep speed may be too high. Accordingly the BFCE may, optionally in addition to other control mechanisms, adjust the sweep speed of all (or selected) beams in the rotating (sub) system accordingly so that (the end points of) the respective beams sweep along the actual or projected line/trajectory at approximately the same speed as the majority of the vehicles or trains to be served, thereby prolonging the dwell time in coverage and mitigating the need to perform handover at least for the majority of the cellular devices located/deployed in (or carried aboard) the vehicles/trains.

Alternatively, or in addition, a measurement procedure may be performed to obtain a measurement of the current average speed of traffic, with this measurement being used to control the sweep speed. This measurement may either be performed by the mobile communications system directly or data could be obtained from another source, such as a provider of traffic information.

A common benefit of the above embodiments over known beam tracking techniques is the independence of the beam steering from the usual fast (physical layer) signalling between the mobile devices being served and the base station. Known beam tracking techniques need fast feedback in order to adjust the beam whereas the present arrangement uses information available in the base station anyway to estimate an optimum sweep speed to serve multiple devices. This information may be derived from neighbour cell measurements that may be performed by the mobile devices in order to support handover decisions, or from information related to actual or intended cell changes of mobile devices, or from location and/or speed information about only a subset of the served mobile devices, or the like.

Each radio beam's width may be configurable. Long beams usually have a small width, while short beams usually have a wide width. What is important in context of the present invention is, that at least parts of the area covered by a beam is following along the known or projected trajectory of the vehicle or train.

In the example deployment of Fig. 3 the precise end points of the various beams are not shown for sake of better readability. In an ideal deployment, the transmission and reception point (TRP) is configured in such a way that the various beams' end points are located on the (known or projected) trajectory of the vehicles or trains. That means beam forming may comprise both rotation and length variation.

In the example deployment of Fig. 3 two sets of resources are shown: Beam 20 is configured to occupy RS1, beam 22 is configured to occupy RS22, and beam 24 is configured to occupy (i.e. to re-use) RS1. Other configurations, such as letting beam 24 occupy a further resource set, RS3, are also possible, as long as interference between adjacent radio beams is avoided.

In order for the BFCE to detect a need for a handover of vehicles/trains/boats from their current beam or cell to the preceding or lagging one inside a (sub) system of rotating beams it may be beneficial in the example scenario of Fig. 3 to disseminate unique cell identifiers (e.g., in the form of Physical Cell IDs, PCIDs) in each of the beams 20, 22, and 24. Doing so would allow a UE to differentiate as part of a cell re-selection procedure (if in IDLE) or as part of reporting measurements for handover (if in CONNECTED) whether the preceding or the lagging beam or cell offers better signal strength (and is thus better suited to camp on).

In the example deployment of Fig. 3 only three radio beams are shown as disseminating by the transmission and reception point TRP 12 for the sake of simplicity. Depending on their actual widths, these are serving a coverage area of approximately one fifth of a circle (70 degree). This invention is by no means restricted to such small segments of a circle. In other scenarios, it may make sense to let the radio beams perform half a rotation (through 180 degrees) or even a full rotation (through 360 degrees).

In the example deployment of Fig. 3 showing a rotation in counter-clockwise direction new radio beams constantly come into existence on the left, while radio beams cease to exist after having performed the configured rotation on the right.

The example of Fig. 3 shows steady beam movements (sweeps) in a counter-clockwise direction. This invention is by no means restricted to beam movements in this direction, i.e. clockwise rotation falls explicitly into the scope of the present invention. Also, it is also possible to let a first subset of beams rotate in counter-clockwise direction and a second subset of beams rotate in clockwise direction.

## Claims

1. A method of operating a mobile communication transmission and reception point (12), the method comprising:
generating at least one directional transmission beam (10, 20, 22, 24) for transmitting signals to at least one user equipment device within a beam coverage, and
changing a transmission direction of the at least one directional transmission beam by sweeping the at least one beam direction across a coverage area in accordance with an expected motion of the at least one user equipment device,
**characterized in that** a rate of sweeping of the transmission direction of the at least one directional transmission beam is changed dependent on a measure of a handover rate of other user equipment devices between a first swept directional transmission beam and a second swept directional transmission beam, wherein the at least one directional transmission beam is one of the first swept directional transmission beam and the second swept directional transmission beam.

2. The method according to claim 1, wherein the transmission direction of the at least one transmission beam is changed without using information as to a current location of the at least one user equipment device.

3. The method according to claim 1 or claim 2, wherein the transmission beam direction is changed with a rate of change of direction dependent on an estimated speed of the at least one user equipment device.

4. The method according to any preceding claim, wherein the transmission beam direction is changed with a rate of change of direction corresponding to an average speed of traffic travelling along a route within the beam coverage.

5. The method according to claim 4, where the rate of change of direction is changed dependent on a time of day of the transmission.

6. The method according to any preceding claim, wherein the at least one directional transmission beam is a plurality of transmission beams and wherein at least two transmission beams share a set of transmission resources.

7. The method according to any preceding claim, wherein the at least one directional transmission beam is a plurality of transmission beams and wherein a first plurality of directional transmission beams change transmission direction in a first rotational direction and a second plurality of directional transmission beams change direction in a second rotational direction, opposite to the first rotational direction.

8. A mobile communications network incorporating transmission and reception points adapted to perform the method of any one of claims 1 to 7.

9. A method of operating a mobile communication transmission and reception point (12), the method comprising:
configuring a reception orientation of the mobile communication transmission and reception point to receive a transmission from at least one user equipment device, and
changing the reception orientation of the mobile communication transmission and reception point by sweeping the reception orientation across a coverage area in accordance with an expected motion of the at least one user equipment device,
**characterized in that** a rate of sweeping of the reception orientation is changed dependent on a measure of a handover rate of other user equipment devices between a first swept directional transmission beam (20, 22, 24) and a second swept directional transmission beam (20, 22, 24).

10. The method according to claim 9, wherein the reception orientation is changed without using information as to a current location of the at least one user equipment device.

11. The method according to claim 9 or claim 10, wherein the reception orientation is changed with a rate of change of direction dependent on an estimated speed of the at least one user equipment device.

12. The method according to any one of claims 1 to 7, wherein a reception orientation is changed in accordance with the transmission direction.

## Patentansprüche

1. Verfahren zum Betreiben eines Übertragungs- und Empfangspunkts (12) für Mobilkommunikation, wobei das Verfahren Folgendes umfasst:
Erzeugen mindestens eines Übertragungsrichtstrahls (10, 20, 22, 24) zum Übertragen von Signalen an mindestens eine Nutzergeräteinrichtung innerhalb einer Strahlabdeckung und Ändern einer Übertragungsrichtung des mindestens einen Übertragungsrichtstrahls durch Schwenken der mindestens einen Strahlrichtung über einen Abdeckungsbereich gemäß einer erwarteten Bewegung der mindestens einen Nutzergeräteinrichtung,
**dadurch gekennzeichnet, dass** eine Schwenkrate der Übertragungsrichtung des mindestens einen Übertragungsrichtstrahls abhängig von einem Maß einer Übergaberate anderer Nutzergeräteinrichtungen zwischen einem ersten geschwenkten Übertragungsrichtstrahl und einem zweiten geschwenkten Übertragungsrichtstrahl geändert wird, wobei es sich bei dem mindestens einen Übertragungsrichtstrahl um entweder den ersten geschwenkten Übertragungsrichtstrahl oder den zweiten geschwenkten Übertragungsrichtstrahl handelt.

2. Verfahren nach Anspruch 1, wobei die Übertragungsrichtung des mindestens einen Übertragungsstrahls ohne Nutzung von Informationen über einen aktuellen Standort der mindestens einen Nutzergeräteinrichtung geändert wird.

3. Verfahren nach Anspruch 1 oder Anspruch 2, wobei die Übertragungsstrahlrichtung mit einer von einer geschätzten Geschwindigkeit der mindestens einen Nutzergeräteinrichtung abhängigen Richtungsänderungsrate geändert wird.

4. Verfahren nach einem der vorhergehenden Ansprüche, wobei die Übertragungsstrahlrichtung mit einer Richtungsänderungsrate geändert wird, die einer Durchschnittsgeschwindigkeit eines sich entlang einer Route innerhalb der Strahlabdeckung bewegenden Verkehrs entspricht.

5. Verfahren nach Anspruch 4, wobei die Richtungsänderungsrate abhängig von einer Tageszeit der Übertragung geändert wird.

6. Verfahren nach einem der vorhergehenden Ansprüche, wobei es sich bei dem mindestens einen Übertragungsrichtstrahl um eine Vielzahl von Übertragungsstrahlen handelt und wobei mindestens zwei Übertragungsstrahlen einen Übertragungsressourcensatz gemeinsam nutzen.

7. Verfahren nach einem der vorhergehenden Ansprüche, wobei es sich bei dem mindestens einen Übertragungsrichtstrahl um eine Vielzahl von Übertragungsstrahlen handelt und wobei eine erste Vielzahl von Übertragungsrichtstrahlen die Übertragungsrichtung in einer ersten Drehrichtung ändert und eine zweite Vielzahl von Übertragungsrichtstrahlen die Richtung in einer der ersten Drehrichtung entgegengesetzten zweiten Drehrichtung ändert.

8. Mobilkommunikationsnetz, das Übertragungs- und Empfangspunkte beinhaltet, die geeignet sind, das Verfahren nach einem der Ansprüche 1 bis 7 durchzuführen.

9. Verfahren zum Betreiben eines Übertragungs- und Empfangspunkts (12) für Mobilkommunikation, wobei das Verfahren Folgendes umfasst:
Konfigurieren einer Empfangsausrichtung des Übertragungs- und Empfangspunkts für Mobilkommunikation, um eine Übertragung von mindestens einer Nutzergeräteinrichtung zu empfangen, und
Ändern der Empfangsausrichtung des Übertragungs- und Empfangspunkts für Mobilkommunikation durch Schwenken der Empfangsausrichtung über einen Abdeckungsbereich gemäß einer erwarteten Bewegung der mindestens einen Nutzergeräteinrichtung,
**dadurch gekennzeichnet, dass** eine Schwenkrate der Empfangsausrichtung abhängig von einem Maß einer Übergaberate anderer Nutzergeräteinrichtungen zwischen einem ersten geschwenkten Übertragungsrichtstrahl (20, 22, 24) und einem zweiten geschwenkten Übertragungsrichtstrahl (20, 22, 24) geändert wird.

10. Verfahren nach Anspruch 9, wobei die Empfangsausrichtung ohne Nutzung von Informationen über einen aktuellen Standort der mindestens einen Nutzergeräteinrichtung geändert wird.

11. Verfahren nach Anspruch 9 oder Anspruch 10, wobei die Empfangsausrichtung mit einer von einer geschätzten Geschwindigkeit der mindestens einen Nutzergeräteinrichtung abhängigen Richtungsänderungsrate geändert wird.

12. Verfahren nach einem der Ansprüche 1 bis 7, wobei eine Empfangsausrichtung gemäß der Übertragungsrichtung geändert wird.

## Revendications

1. Procédé d'utilisation d'un point d'émission et de réception de communication mobile (12), le procédé comprenant les étapes consistant à :
générer au moins un faisceau d'émission directionnel (10, 20, 22, 24) pour émettre des signaux vers au moins un dispositif d'équipement d'utilisateur situé dans une couverture de faisceau, et
changer une direction d'émission dudit au moins un faisceau d'émission directionnel en balayant ladite au moins une direction de faisceau sur une zone de couverture en fonction d'un mouvement attendu dudit au moins un dispositif d'équipement d'utilisateur,
**caractérisé en ce que** l'on fait varier une vitesse de balayage de la direction d'émission dudit au moins un faisceau d'émission directionnel en fonction d'une mesure d'une vitesse de transfert d'autres dispositifs d'équipement d'utilisateur entre un premier faisceau d'émission directionnel balayé et un deuxième faisceau d'émission directionnel balayé, ledit au moins un faisceau d'émission directionnel étant un faisceau parmi le premier faisceau d'émission directionnel balayé et le deuxième faisceau d'émission directionnel balayé.

2. Procédé selon la revendication 1, dans lequel on fait varier la direction d'émission dudit au moins un faisceau d'émission sans utiliser d'informations concernant un emplacement actuel dudit au moins un dispositif d'équipement d'utilisateur.

3. Procédé selon la revendication 1 ou 2, dans lequel on fait varier la direction de faisceau d'émission avec une certaine vitesse de changement de direction en fonction d'une vitesse estimée dudit au moins un dispositif d'équipement d'utilisateur.

4. Procédé selon l'une quelconque des revendications précédentes, dans lequel on fait varier la direction de faisceau d'émission avec une vitesse de changement de direction correspondant à une vitesse moyenne du trafic circulant sur un trajet situé dans la couverture de faisceau.

5. Procédé selon la revendication 4, dans lequel on fait varier la vitesse de changement de direction en fonction d'une heure du jour de l'émission.

6. Procédé selon l'une quelconque des revendications précédentes, dans lequel ledit au moins un faisceau d'émission directionnel est une pluralité de faisceaux d'émission et dans lequel au moins deux faisceaux d'émission partagent un ensemble de ressources d'émission.

7. Procédé selon l'une quelconque des revendications précédentes, dans lequel ledit au moins un faisceau d'émission directionnel est une pluralité de faisceaux d'émission et dans lequel une première pluralité de faisceaux d'émission directionnels change de direction d'émission dans une première direction de rotation et une deuxième pluralité de faisceaux d'émission directionnels change de direction dans une deuxième direction de rotation, opposée à la première direction de rotation.

8. Réseau de communication mobile incorporant des points d'émission et de réception capables d'exécuter le procédé selon l'une quelconque des revendications 1 à 7.

9. Procédé d'utilisation d'un point d'émission et de réception de communication mobile (12), le procédé comprenant les étapes consistant à :
configurer une orientation de réception du point d'émission et de réception de communication mobile pour recevoir une émission provenant d'au moins un dispositif d'équipement d'utilisateur, et
changer l'orientation de réception du point d'émission et de réception de communication mobile en balayant l'orientation de réception sur une zone de couverture en fonction d'un mouvement attendu dudit au moins un dispositif d'équipement d'utilisateur,
**caractérisé en ce que** l'on fait varier une vitesse de balayage de l'orientation de réception en fonction d'une mesure d'une vitesse de transfert d'autres dispositifs d'équipement d'utilisateur entre un premier faisceau d'émission directionnel balayé (20, 22, 24) et un deuxième faisceau d'émission directionnel balayé (20, 22, 24).

10. Procédé selon la revendication 9, dans lequel on fait varier l'orientation de réception sans utiliser d'informations concernant un emplacement actuel dudit au moins un dispositif d'équipement d'utilisateur.

11. Procédé selon la revendication 9 ou 10, dans lequel on fait varier l'orientation de réception avec une certaine vitesse de changement de direction en fonction d'une vitesse estimée dudit au moins un dispositif d'équipement d'utilisateur.

12. Procédé selon l'une quelconque des revendications 1 à 7, dans lequel on fait varier une orientation de réception en fonction de la direction d'émission.
